# EUROPEAN PATENT APPLICATION

(11) **EP 3 226 546 A1**
(43) Date of publication of application: **04.10.2017**
(21) Application number: 15863892.4
(22) Date of filing: 11.02.2015
(51) Int. Cl.: H04N 5/235

(54) **BRIGHTNESS COMPENSATION METHOD AND DEVICE, AND COMPUTER STORAGE MEDIUM**

(30) Priority: 25.11.2014 CN 201410692766
(71) Applicant: ZTE Corporation, Shenzhen, Guangdong 518057 (CN)
(72) Inventor: LI, Fu, Shenzhen, Guangdong 518057 (CN)
(74) Representative: Lavoix
(86) International application number: PCT/CN2015/072776
(87) International publication number: WO 2016/082347

(57) **Abstract**

Provided are a brightness compensation method and device, and a computer storage medium. The method includes: dividing a captured picture into a preset number of blocks; determining depth of field information of an image in each block; and performing division block brightness compensation on the picture according to the determined depth of field information. The present invention solves the problem in the prior art of poor capturing quality, and thereby achieves the effect of improving capturing quality.

## Description

### TECHNICAL FIELD

The disclosure relates to the field of communications, and in particular to a brightness compensation method and device, and a computer storage medium.

### BACKGROUND

A flashlight is capable of emitting a strong light within a short time, and is a photographic accessory for supplementary lighting during picture capturing. The flashlight is used for instant lighting in a dark-light occasion or also used for locally compensating light for a captured object in a bright-light occasion. The flashlight is small in appearance, safe to use, convenient to carry, and stable in performance.

With the popularization of a smart terminal, there are more and more scenarios where a flashlight assists people in capturing at night. A mobile phone is taken as an example for description. The phenomena where a near position and a central position are bright and a remote position and four corners are dark are easily caused by a flashlight of the mobile phone in the related art due to limitations of process and volume. Moreover, the brightness of the flashlight cannot be compensated in the related art, thus resulting in the problem of poor quality of photographing or shooting.

Any effective solution has not been proposed yet currently for the problem in the related art of poor capturing quality.

### SUMMARY

The embodiments of the disclosure are intended to provide a brightness compensation method and device, and a computer storage medium, which are used to at least solve the problem in the related art of poor capturing quality.

According to a first aspect of the embodiment of the disclosure, a brightness compensation method is provided, which includes: a captured picture is divided into a preset number of blocks; depth-of-field information of an image in each block is determined; and brightness compensation is performed on the picture on a block basis according to the determined depth-of-field information.

In an embodiment, the step that brightness compensation is performed on the picture on a block basis according to the determined depth-of-field information may include one of the following: the brightness of an image of which the depth of field is smaller than the depth of field of a foreground in the picture is suppressed; and the brightness of an image of which the depth of field is larger than the depth of field of a target image in the picture is enhanced.

In an embodiment, before the step that brightness compensation is performed on the picture on a block basis according to the determined depth-of-field information, the method may further include: a brightness compensation matrix is determined; and a matrix formed by the preset number of blocks is converted into the brightness compensation matrix.

In an embodiment, after the step that brightness compensation is performed on the picture on a block basis according to the determined depth-of-field information, the method may further include: the brightness of adjacent blocks is smoothed.

In an embodiment, the captured picture may include at least one of the following: a picture stored after capturing is completed; and a non-stored picture formed by preview data.

According to a second aspect of the embodiment of the disclosure, a brightness compensation device is also provided, which may include: a division module arranged to divide a captured picture into a preset number of blocks; a first determination module arranged to determine depth-of-field information of an image in each block; and a compensation module arranged to perform brightness compensation on the picture on a block basis according to the determined depth-of-field information.

In an embodiment, the compensation module may be arranged to: suppress the brightness of an image of which the depth of field is smaller than the depth of field of a foreground in the picture; and/or enhance the brightness of an image of which the depth of field is larger than the depth of field of a target image in the picture.

In an embodiment, the brightness compensation device may further include: a second determination module arranged to determine a brightness compensation matrix; and a conversion module arranged to convert a matrix formed by the preset number of blocks into the brightness compensation matrix.

In an embodiment, the brightness compensation device may further include: a processing module arranged to smooth the brightness of adjacent blocks.

In an embodiment, the captured picture may include at least one of the following: a picture stored after capturing is completed; and a non-stored picture formed by preview data.

According to a third aspect of the embodiment of the disclosure, a computer storage medium is provided. A computer-executable instruction may be stored in the computer storage medium. The computer-executable instruction may be used for executing at least one of the methods according to the first aspect of the embodiment of the disclosure.

In the brightness compensation method and device and the computer storage medium according to the embodiment of the disclosure, a captured picture is divided into a preset number of blocks; depth-of-field information of an image in each block is determined; and brightness compensation is performed on the picture on a block basis according to the determined depth-of-field information. The problem in the related art of poor capturing quality is solved, thus achieving the effect of improving the capturing quality.

### BRIEF DESCRIPTION OF THE DRAWINGS

Fig. 1 is a flowchart of a brightness compensation method according to an embodiment of the disclosure;
Fig. 2 is a structural diagram of a brightness compensation device according to an embodiment of the disclosure;
Fig. 3 is a first structural diagram of a brightness compensation device according to an embodiment of the disclosure;
Fig. 4 is a second structural diagram of a brightness compensation device according to an embodiment of the disclosure;
Fig. 5 is a structural diagram of a brightness compensation system according to an embodiment of the disclosure; and
Fig. 6 is a flowchart showing compensation of the brightness of a flashlight using depth-of-field information according to an embodiment of the disclosure.

### DETAILED DESCRIPTION

The technical solution of the disclosure will be described in detail hereinbelow with reference to the drawings and the embodiments. It is important to note that the embodiments in the present application and the features in the embodiments may be combined with each other without conflicts. But, what is noteworthy is that preferable embodiments described below are only used to describe and explain the disclosure, and not used to limit the disclosure.

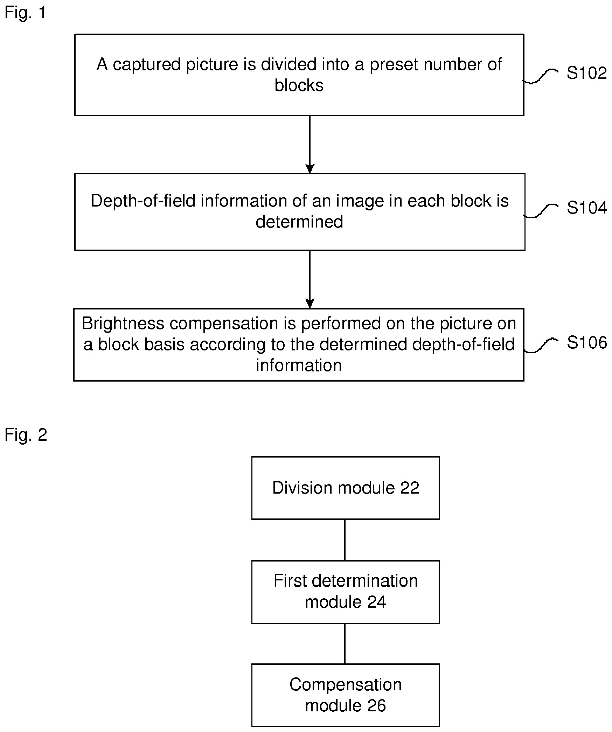

In the present embodiment, a brightness compensation method is provided. Fig. 1 is a flowchart showing a brightness compensation method according to an embodiment of the disclosure. As shown in Fig. 1, the method includes Steps S102 to S106.

In Step S102, a captured picture is divided into a preset number of blocks.

In Step S104, depth-of-field information of an image in each block is determined.

In Step S106, brightness compensation is performed on the picture on a block basis according to the determined depth-of-field information.

By means of the abovementioned steps, brightness compensation is performed on a block basis according to depth-of-field information of an image in the captured picture, fine brightness compensation on a block basis for the captured picture is implemented, and the problem in the related art of poor capturing quality is solved, thus achieving the effect of improving the capturing quality.

When brightness compensation is performed on the captured picture on a block basis according to the determined depth-of-field information, multiple brightness compensation methods may be included. In an alternative embodiment, performing brightness compensation on the picture on a block basis according to the determined depth-of-field information may include one of the following: suppressing the brightness of an image of which the depth of field is smaller than the depth of field of a foreground in the picture; and enhancing the brightness of an image of which the depth of field is larger than the depth of field of a target image in the picture. The brightness of an image of which the depth of field is larger than the depth of field of the foreground and smaller than the depth of field of the target image may not be processed but maintained to be original brightness, and moreover, an image of which the depth of field is larger than the depth of field of a background in the picture may also not be processed, thus adjusting the overall brightness of the picture and improving the quality of the captured picture.

Before performing brightness compensation on the picture on a block basis according to the determined depth-of-field information, matrix processing may also be performed, including: determining a brightness compensation matrix; and converting a matrix formed by the preset number of blocks into the brightness compensation matrix. Thus, it is ensured that different brightness compensation devices can achieve brightness compensation with the same effect.

Moreover, in order to prevent over-violent change of patterns between adjacent blocks, relevant smoothing may be performed. In an alternative embodiment, after performing brightness compensation on the picture on a block basis according to the determined depth-of-field information, the method may further include: smoothing the brightness of adjacent blocks.

The abovementioned captured picture may include at least one of the following: a picture stored after capturing is completed; and a non-stored picture formed by preview data. That is to say, during storing of a picture, when the picture is previewed, brightness compensation may be performed on the previewed picture, and after the picture is stored, the stored picture may be analyzed and then subjected to brightness compensation. The picture quality is improved.

In the present embodiment, a brightness compensation device is also provided. The device may be arranged to implement one or more technical solutions in the abovementioned embodiment. Those which have been described will not be elaborated herein. As used below, the term 'module' may implement the combination of software and/or hardware with predetermined functions. Although the device described by the following embodiment is better implemented by software, the implementation of hardware or the combination of software and hardware may be possible and conceived.

Fig. 2 is a structural diagram of a brightness compensation device according to an embodiment of the disclosure. As shown in Fig. 2, the device includes a division module 22, a first determination module 24 and a compensation module 26. The device will be described hereinbelow.

The division module 22 is arranged to divide a captured picture into a preset number of blocks; the first determination module 24 is connected to the division module 22, and is arranged to determine depth-of-field information of an image in each block; and the compensation module 26 is connected to the first determination module 24, and is arranged to perform brightness compensation on the picture on a block basis according to the determined depth-of-field information.

Where, the compensation module 26 may be arranged to perform at least one of the following operations: suppressing the brightness of an image of which the depth of field is smaller than the depth of field of a foreground in the picture; and enhancing the brightness of an image of which the depth of field is larger than the depth of field of a target image in the picture.

Specific structures of the division module 22, the first determination module 24 and the compensation module 26 may include a processor and a computer storage medium. The processor is connected to the computer storage medium through a bus. The computer storage medium stores an executable instruction. The processor can achieve functions of the division module 22, the first determination module 24 and the compensation module 26 by executing the executable instruction.

The division module 22, the first determination module 24 and the compensation module 26 may correspond to different processors or may be integrated to correspond to an identical processor. When the division module 22, the first determination module 24 and the compensation module 26 are integrated to correspond to an identical processor, the processor adopts time division multiplexing or thread concurrency to execute the operations of the division module 22, the first determination module 24 and the compensation module 26. The processor may be a processor having an information processing function such as an Application Processor (AP), a Central Processing Unit (CPU), a Micro Control Unit (MCU), a Digital Signal Processor (DSP) and a Programmable Logic Controller (PLC).

The division module 22, the first determination module 24 and the compensation module 26 may correspond to different processors or may be integrated to correspond to an identical processor. If the division module 22, the first determination module 24 and the compensation module 26 are integrated to correspond to an identical processor, the processor adopts time division multiplexing or thread concurrency to execute functions of different modules.

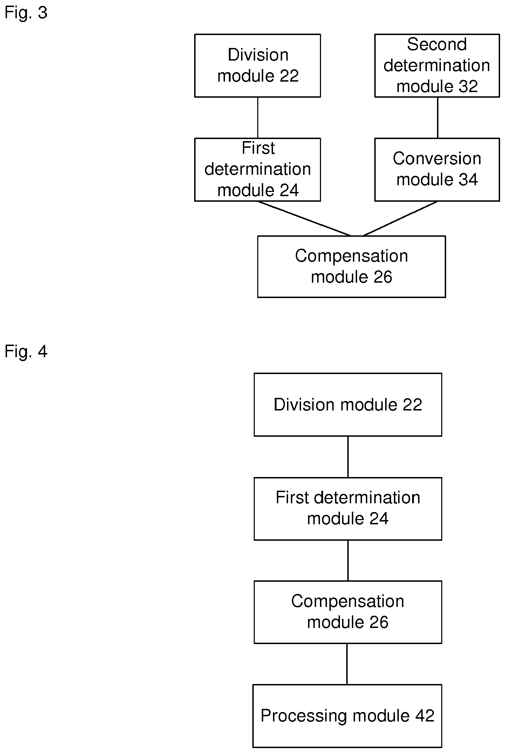

Fig. 3 is a structural diagram 1 of a brightness compensation device according to an embodiment of the disclosure. As shown in Fig. 3, the device includes, in addition to all the modules shown in Fig. 2, a second determination module 32 and a conversion module 34. The device will be continuously described hereinbelow.

The second determination module 32 is arranged to determine a brightness compensation matrix; and the conversion module 34 is connected to the second determination module 32 and the compensation module 26, and is arranged to convert a matrix formed by the preset number of blocks into the brightness compensation matrix.

Fig. 4 is a structural diagram 2 of a brightness compensation device according to an embodiment of the disclosure. As shown in Fig. 4, the device includes, in addition to all the modules shown in Fig. 2, a processing module 42. The device will be described hereinbelow.

The processing module 42 is connected to the compensation module 26, and is arranged to smooth the brightness of adjacent blocks.

Where, the captured picture includes at least one of the following: a picture stored after capturing is completed; and a non-stored picture formed by preview data.

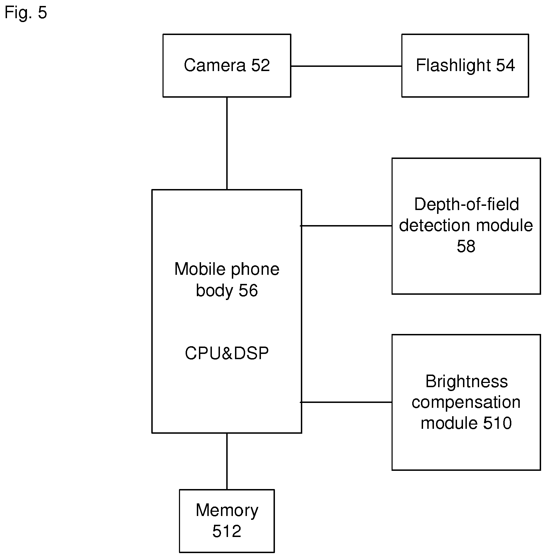

Fig. 5 is a structural diagram of a brightness compensation system according to an embodiment of the disclosure. Fig. 5 shows description by adopting a mobile phone as a capturing terminal. The system includes a camera 52, a flashlight 54, a mobile phone body 56, a depth-of-field detection module 58 (equivalent to the first determination module 24), a brightness compensation module 510 (equivalent to the compensation module 26) and a memory 512. Where, the mobile phone body 56 includes a DSP. The DSP included by the mobile phone body 56 at least has a capability of collecting RAW data and processing the RAW data to finally generate a JPEG picture. The depth-of-field detection module 58 has a substantial capability of identifying a distance between an object in the whole picture and the camera, an error being within a certain range (e.g., 10%). It may be implemented by a sensor at the camera 52 or may be implemented through an image collected by dual cameras at the mobile phone. The flashlight brightness compensation module 510 has a function of changing the brightness of the whole picture according to grid (e.g., 17*13) partitioning. The brightness of an image is compensated in a mobile phone image processing flow by utilizing depth-of-field information of the image. The picture is divided into grids according to different depths of field, over-exposed grids at a near position are suppressed, and under-exposed grids at a remote position are enhanced, thus improving the quality of a picture. During specific implementation, the DSP may also be replaced with a processor or a processing chip having an information processing function such as an AP, a CPU, an MCU or a PLC.

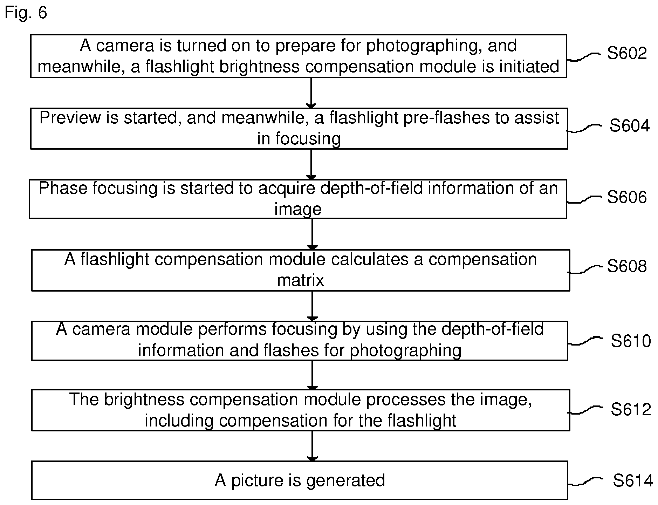

Fig. 6 is a flowchart showing a process for compensation of the brightness of a flashlight using depth-of-field information according to an embodiment of the disclosure. As shown in Fig. 6, the process includes Steps S602 to S614.

In Step S602, a camera is turned on to prepare for photographing, and meanwhile, a flashlight brightness compensation module 510 is initiated.

In Step S604, preview is started, and meanwhile, a flashlight 45 pre-flashes to assist in focusing.

In Step S606, phase focusing is started to acquire depth-of-field information of an image.

In Step S608, a flashlight compensation module calculates a compensation matrix.

In Step S610, focusing is performed by using the depth-of-field information, and flashing is performed for photographing.

In Step S612, the brightness compensation module 510 processes the image, including compensation for the flashlight 45.

In Step S614, a picture is generated.

Brightness compensation for the flashlight is distinguished according to different distances of objects by means of the depth-of-field information. The compensation method is accurate, and an active picture effect is better.

After a camera module of a mobile phone is initiated, if a flashlight mode is set as a mode of opening or automatically enabling the flashlight, the flashlight compensation module is initiated. In a preview process, the flashlight may be initiated to assist in focusing as required.

After receiving preview data, the depth-of-field detection module 58 (such as dual cameras or a camera with phase difference information) responsible for collecting the depth-of-field information begins to collect the depth-of-field information. The depth of the whole scenario within a certain depth-of-field range is analyzed first, then the whole picture is divided into M1*N1 matrices, and images in the matrices are marked with the depth-of-field information block by block.

Usually, under the limitation of a lens, when the flashlight is not turned on, the phenomenon of bright middle and dark periphery of an image will occur. This phenomenon is compensated by a DSP in a common mobile phone to improve the brightness of the periphery. In the embodiment of the disclosure, it may be implemented by means of the DSP or may be implemented by other software/hardware modules capable of changing the brightness of the image, collectively referred to as a flashlight brightness compensation module, which divides the picture into M*N blocks. Gains of different blocks may be increased or decreased as required, thus achieving the aim of adjusting the brightness uniformity of the picture.

Since matrix sizes of different flashlight brightness compensation modules may not be identical, if a specific size is M*N, it is necessary to convert M1*N1 of depth-of-field information into a compensation matrix M*N. Meanwhile, the depth of field of a target object in a picture may be set as T2, the depth of field of a foreground is set as T1, and the depth of field of a background is set as T3. If the depth of field is smaller than T1, the brightness of this block is suppressed. If the depth of field is between T1 and T2, the brightness remains unchanged. If the depth of field is between T2 and T3, the brightness is increased. If the depth of field is larger than T3, the brightness is not processed or is slightly enhanced due to a too long distance.

Table lookup or calculation assistance is performed on M*N one by one by using the abovementioned rule to generate a new M*N table, and then adjacent grids are smoothed to prevent over-violent brightness change. After compensation parameters are completed calculated, a parameter table is set in the brightness compensation module (DSP or specific implementation module).

The above image may come from preview data, all processes may be completed before photographing, and after formal photographing data is collected, the data may be adjusted.

Since multiple channels (such as YCbCr or RGbGrB) are often adopted for processing the image in the DSP, it may be necessary to compensate the multiple channels. So, it may be necessary to generate multiple tables.

The embodiment of the disclosure also provides a computer storage medium. A computer-executable instruction is stored in the computer storage medium. The computer-executable instruction is used for executing at least one of the methods according to the embodiment of the disclosure, specifically such as the methods shown in one or more of Fig. 1, Fig. 5 and Fig. 6.

The computer storage medium may be various media capable of storing program codes, such as a U disk, a mobile hard disk, a Read-Only Memory (ROM), a Random Access Memory (RAM), a magnetic disk or an optical disk. In some embodiments, the computer storage medium is a non-transitory storage medium.

Obviously, a person skilled in the art shall understand that all of the abovementioned modules or steps in the disclosure may be implemented by using a general calculation device, may be centralized on a single calculation device or may be distributed on a network composed of a plurality of calculation devices. Alternatively, they may be implemented by using executable program codes of the calculation devices. Thus, they may be stored in a storage device and executed by the calculation devices, the shown or described steps may be executed in a sequence different from this sequence under some conditions, or they are manufactured into each integrated circuit module respectively, or multiple modules or steps therein are manufactured into a single integrated circuit module. Thus, the disclosure is not limited to a combination of any specific hardware and software.

The above is only the preferable embodiments of the disclosure, and not intended to limit the scope of protection of the disclosure. Any modifications made in accordance with the principle of the disclosure shall be interpreted as falling within the scope of protection of the disclosure.

### INDUSTRIAL APPLICABILITY

In the brightness compensation method and device and the computer storage medium according to the embodiment of the disclosure, a captured picture is divided, brightness compensation is determined according to depth-of-field information of an image in each region, and depth-of-field layers formed by brightness compensation are richer and more obvious finally. The image quality effect of a captured picture susceptible to brightness compensation using the technical solution in the present embodiment is better than the image quality effect of a captured picture susceptible to brightness compensation without the technical solution in the present embodiment. By being applied to electronic equipment having image collection and capturing functions such as a mobile phone, the intelligence of the electronic equipment is improved, the quality of a formed image is higher, and the user satisfaction is higher.

## Claims

1. A brightness compensation method, comprising:
dividing a captured picture into a preset number of blocks;
determining depth-of-field information of an image in each block; and
performing brightness compensation on the picture on a block basis according to the determined depth-of-field information.

2. The method according to claim 1, wherein performing brightness compensation on the picture on a block basis according to the determined depth-of-field information comprises one of the following:
suppressing the brightness of an image of which the depth of field is smaller than the depth of field of a foreground in the picture; and
enhancing the brightness of an image of which the depth of field is larger than the depth of field of a target image in the picture.

3. The method according to claim 1, further comprising: before performing brightness compensation on the picture on a block basis according to the determined depth-of-field information,
determining a brightness compensation matrix; and
converting a matrix formed by the preset number of blocks into the brightness compensation matrix.

4. The method according to claim 1, further comprising: after performing brightness compensation on the picture on a block basis according to the determined depth-of-field information,
smoothing the brightness of adjacent blocks.

5. The method according to any one of claims 1-4, wherein the captured picture comprises at least one of the following:
a picture stored after capturing is completed; and
a non-stored picture formed by preview data.

6. A brightness compensation device, comprising:
a division module arranged to divide a captured picture into a preset number of blocks;
a first determination module arranged to determine depth-of-field information of an image in each block; and
a compensation module arranged to perform brightness compensation on the picture on a block basis according to the determined depth-of-field information.

7. The device according to claim 6, wherein
the compensation module is arranged to: suppress the brightness of an image of which the depth of field is smaller than the depth of field of a foreground in the picture; and/or enhance the brightness of an image of which the depth of field is larger than the depth of field of a target image in the picture.

8. The device according to claim 6, further comprising:
a second determination module arranged to determine a brightness compensation matrix; and
a conversion module arranged to convert a matrix formed by the preset number of blocks into the brightness compensation matrix.

9. The device according to claim 6, further comprising:
a processing module arranged to smooth the brightness of adjacent blocks.

10. The device according to any one of claims 6-9, wherein the captured picture comprises at least one of the following:
a picture stored after capturing is completed; and
a non-stored picture formed by preview data.

11. A computer storage medium having stored therein computer-executable instructions for executing the method according to any one of claims 1-5.
